# EUROPÄISCHE PATENTSCHRIFT

(11) **EP 1 925 047 B1**
(45) Veröffentlichungstag und Bekanntmachung des Hinweises auf die Patenterteilung: **29.07.2015**
(21) Anmeldenummer: 06763519.3
(22) Anmeldetag: 06.06.2006
(51) Int. Cl.: H01M 2/16, H01M 2/14, H01M 10/052

(54) **SEPARATOR MIT VERBESSERTER HANDHABBARKEIT**
SEPARATOR WITH IMPROVED EASE OF HANDLING
SEPARATEUR PRESENTANT UNE PLUS GRANDE FACILITE D'UTILISATION

(30) Priorität: 05.09.2005 DE 102005042215
(43) Veröffentlichungstag der Anmeldung: 28.05.2008
(73) Patentinhaber: Evonik Degussa GmbH, 45128 Essen (DE)
(72) Erfinder: HYING, Christian, 46414 Rhede (DE); HENNIGE, Volker, 48249 Dülmen (DE); HÖRPEL, Gerhard, 48301 Nottuln (DE)
(86) Internationale Anmeldenummer: PCT/EP2006/062915
(87) Internationale Veröffentlichungsnummer: WO 2007/028662

(56) Entgegenhaltungen:
- WO-A-2004/112183
- DE-A1- 10 238 941
- DE-A1- 10 238 944
- DE-A1- 10 347 566
- JP-A- 6 140 016
- JP-A- 57 095 071
- US-B1- 6 495 292

## Beschreibung

Die vorliegende Erfindung betrifft einen Separator für eine elektrochemische Zelle, ein Verfahren zur Herstellung eines solchen Separators sowie eine elektrochemische Zelle, die einen solchen Separator umfasst.

Unter elektrochemischer Zelle oder Batterie sind in dieser Beschreibung Batterien und Akkumulatoren (Sekundärbatterien) jeder Art zu verstehen, insbesondere Alkali-, wie z. B. Lithium-, Lithiumionen-, Lithium-Polymer-, und Erdalkali-Batterien und -Akkumulatoren und zwar auch in Form von Hochenergie- oder Hochleistungssystemen.

Elektrochemische Zellen umfassen gegenpolige Elektroden, die durch einen Separator unter Aufrechterhaltung von Ionenleitfähigkeit, voneinander separiert sind.

Herkömmlicherweise ist ein Separator ein dünner, poröser, elektrisch isolierender Stoff mit hoher Ionendurchlässigkeit, guter mechanischer Festigkeit und Langzeitstabilität gegen die im System, z. B. im Elektrolyten der elektrochemischen Zelle, verwendeten Chemikalien und Lösemittel. Er soll in elektrochemischen Zellen die Kathode von der Anode elektronisch völlig isolieren. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die einer elektrochemischen Zelle. Die Entwicklung wiederaufladbarer elektrochemischer Zellen oder Batterien wird daher durch die Entwicklung geeigneter Separatormaterialien beeinflusst. Allgemeine Informationen über elektrische Separatoren und Batterien können z. B. bei J.O. Besenhard in "Handbook of Battery Materials" (VCH-Verlag, Weinheim 1999) nachgelesen werden.

Hochenergiebatterien werden in verschiedenen Anwendungen eingesetzt, bei denen es darauf ankommt eine möglichst große Menge an elektrischer Energie verfügbar zu haben. Dies ist beispielsweise bei Traktionsbatterien aber auch bei der Not-Strom-Versorgung mit Batterien (Auxillary Power Systems) der Fall. Die Energiedichte wird dabei häufig in gewichts- [Wh/kg] oder in volumenbezogenen [Wh/L] Größen angegeben. Augenblicklich werden in Hochenergiebatterien Energiedichten von 350 bis 400 Wh/L und von 150 bis 200 Wh/kg erreicht. Die abgefragte Leistung bei solchen Batterien ist nicht so groß, so dass man Kompromisse hinsichtlich des Innenwiderstandes machen kann. Das heißt, dass die Leitfähigkeit des Elektrolyt gefüllten Separators beispielsweise nicht so groß sein muss wie bei Hochleistungsbatterien, so dass dadurch auch andere Separatorkonzepte möglich werden.

So können bei Hochenergiesystemen auch Polymerelektrolyte eingesetzt werden, die mit 0,1 bis 2 mS/cm eine doch recht geringe Leitfähigkeit besitzen. Solche Polymerelektrolytzellen können nicht als Hochleistungsbatterien eingesetzt werden.

Separatormaterialien für die Anwendung in Hochleistungsbatteriesystemen müssen folgende Eigenschaften besitzen:
Sie müssen möglichst dünn sein, um einen geringen spezifischen Platzbedarf zu gewährleisten und um den Innenwiderstand klein zu halten. Um diese geringen Innenwiderstände zu gewährleisten ist es wichtig, dass der Separator auch eine große Porosität aufweist. Ferner müssen sie leicht sein, damit ein geringes spezifisches Gewicht erreicht wird. Außerdem muss die Benetzbarkeit hoch sein, da sonst nicht benetzte Totzonen entstehen.

In vielen, vor allem mobilen Anwendungen werden sehr große Energiemengen benötigt (z. B. in Traktionsbatterien). Die Batterien in diesen Anwendungen speichern im vollgeladenen Zustand also große Energiemengen. Hierfür muss der Separator sicher sein, da in diesen Batterien sehr große elektrische Energiemengen transportiert werden. Diese Energien dürfen bei einer Fehlfunktion der Batterie, wie z. B. Überladung oder Kurzschluss, bzw. bei einem Unfall nicht unkontrolliert freigesetzt werden, da dies unweigerlich zur Explosion der Zelle unter Feuererscheinung führen würde.

Derzeitig eingesetzte Separatoren bestehen überwiegend aus porösen organischen Polymerfilmen bzw. aus anorganischen Vliesstoffen, wie z. B. Vliesen aus Glas- oder KeramikMaterialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere.

Die Separatoren aus anorganischen Vliesstoffen oder aus Keramikpapier sind mechanisch sehr unbeständig und führen leicht zu Kurzschlüssen, so dass keine große Standzeit erreicht werden kann.

Ein typischer organischer Separator besteht z. B. aus Polypropylen oder aus einem Polypropylen/Polyethylen/Polypropylen-Verbund. Ein großer Nachteil dieser organischen Polyolefinseparatoren ist deren geringe thermische Belastbarkeit von unter 150 °C. Schon ein kurz anhaltendes Erreichen des Schmelzpunkts dieser Polymere führt zu einem weitgehendem Schmelzen des Separators und zu einem Kurzschluss in der elektrochemischen Zelle, die einen solchen Separator einsetzt. Der Einsatz solcher Separatoren ist daher generell nicht sicher. Denn beim Erreichen von höheren Temperaturen, insbesondere von über 150 °C oder gar 180 °C werden diese Separatoren zerstört.

Um diese Nachteile zu überwinden, gab es erste Versuche anorganische Verbundmaterialien als Separatoren einzusetzen. So wird in DE 198 38 800 C1 ein elektrischer Separator mit einer Verbundstruktur vorgeschlagen, der ein flächiges, mit einer Vielzahl von Öffnungen versehenes, flexibles Substrat mit einer darauf befindlichen Beschichtung umfasst. Das Material des Substrates ist ausgewählt aus Metallen, Legierungen, Kunststoffen, Glas und Kohlefaser oder einer Kombination solcher Materialien, und die Beschichtung ist eine flächig durchgehende, poröse, elektrisch nicht leitende keramische Beschichtung. Der Einsatz der keramischen Beschichtung verspricht thermische und chemische Beständigkeit. Die Separatoren, die einen Träger oder ein Substrat aus elektrisch leitendem Material aufweisen (wie im Beispiel angegeben), haben sich allerdings als ungeeignet für elektrochemische Zellen herausgestellt, da die Beschichtung in der beschriebenen Dicke nicht großflächig fehlerfrei hergestellt werden kann. Somit kommt es sehr leicht zu Kurzschlüssen. Außerdem sind so dünne Metallgewebe, wie sie für sehr dünne Separatoren benötigt werden, kommerziell nicht verfügbar.

In WO 99/62624 werden keramische Membrane beschieben, die hydrophobiert werden können.

Ein Einsatz solcher Membrane als Separatoren in Batterien wird nicht beschrieben. Als Substrat für die keramische Membran können, wie in DE 198 38 800 beschrieben, eine große Anzahl an Materialien, insbesondere Metallgewebe, verwendet werden.

In vorangehenden Arbeiten (DE 101 42 622) konnte gezeigt werden, dass mit einem Material, das ein flächiges, mit einer Vielzahl von Öffnungen versehenes, flexibles Substrat mit einer auf und in diesem Substrat befindlichen Beschichtung umfasst, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist, und wobei der resultierende Separator eine Dicke von kleiner 100 µm aufweist und biegbar ist, ein Separator herstellbar ist, der in Verbindung mit dem Elektrolyten einen genügend geringen Widerstand aufweist und trotzdem eine ausreichend große Langzeitbeständigkeit aufweist. Der in DE 101 42 622 beschriebene Separator weist zwar eine sehr hohe Leitfähigkeit auf, jedoch genügt der dort beschriebene Separator immer noch nicht den Anforderungen an einen technisch einsetzbaren Separator bezüglich der Dicke und des Gewichts sowie der Sicherheit.

In der DE 102 08 277 wurde das Gewicht und die Dicke des Separators dadurch reduziert, dass ein Polymervlies eingesetzt wurde, aber auch die dort beschriebenen Ausführungsformen eines Separators genügen noch nicht allen Anforderungen an einen Separator für eine Lithium-Hochenergiebatterie, insbesondere weil in dieser Anmeldung besonderer Wert gelegt wurde auf möglichst große Poren des Separators. Mit den dort beschriebenen, bis 5 µm großen Partikeln ist es aber nicht möglich, 10 bis 40 µm dicke Separatoren herzustellen, da hier nur einige wenige Partikel übereinander zu liegen kämen. Dadurch würde der Separator zwangsläufig eine große Fehler- und Störstellendichte (z. B. Löcher, Risse, ...) aufweisen.

In neuester Zeit konnten keramische bzw. hybride Separatoren entwickelt werden, die für die Verwendung in Li-Ionen-Batterien im Wesentlichen geeignet sind. Solche Separatoren werden z. B. in DE 103 47 569, DE 103 47 566 oder DE 103 47 567 beschrieben. Aus DE 102 38 945 sind besonders sichere keramische Separatoren bekannt, die eine zusätzliche Schicht von Abschaltpartikeln auf der Oberfläche der keramischen Beschichtung aufweisen, wobei die Schicht bei unzulässig hoher Erwärmung durch Schmelzen der Partikel eine Barriereschicht auf der Oberfläche erzeugen und somit einen weiteren Ionenfluss verhindern.

Bei der Herstellung von Batterien können verschiedene Techniken angewandt werden. So werden zur Herstellung zylindrischer Batteriezellen Separator/Elektroden-Lagen aufgewickelt und in einem entsprechenden Gehäuse verschlossen. Bei anderen Batteriezellgeometrien werden z. B. die einzelnen Separator/ Elektroden-Lagen aufeinander gestapelt und zum Schluss miteinander verschweißt. Es gibt auch laminierte Formen oder gewickelte prismatische Zellen.

Bei diesen verschiedenen Herstellverfahren kommt es immer wieder zu Problemen infolge der mechanischen Handhabung des keramischen Separatormaterials. Durch Unachtsamkeit oder auch durch den Herstellprozess kann es leicht zu einer Beschädigung des keramischen Separators kommen, wodurch es dann leicht zu Kurzschlüssen in der Batterie, z. B. aufgrund von Löchern in den Knicken und/oder Falten im Separator kommen kann.

Aufgabe der vorliegenden Erfindung war es deshalb einen alternativen Separator bereitzustellen, der vorzugsweise einen oder mehrere der oben genannten Nachteile nicht aufweist. Insbesondere sollte ein Separator bereitgestellt werden, der eine verbesserte Handhabbarkeit und trotzdem vergleichbare elektrochemische Eigenschaften wie aus dem Stand der Technik bekannte Separatoren aufweist.

Überraschenderweise wurde gefunden, dass ein Separator, der auf einem Substrat und in den Zwischenräumen des Substrats, eine nicht elektrisch leitfähige Beschichtung aus miteinander und mit dem Substrat verklebten Oxidpartikeln aufweist, deutlich haltbarer ist, wenn die keramische Beschichtung neben den Oxidpartikel auch Polymerpartikel enthält. Insbesondere beim Auftreten eines Knickes oder Risses im Separator, setzt sich dieser beim Vorhandensein von Polymerpartikeln in der keramischen Beschichtung nicht weiter fort als bis zum nächsten Polymerpartikel.

Gegenstand der vorliegenden Erfindung ist deshalb ein Separator, der auf einem Substrat und in den Zwischenräumen des Substrats, welches Fasern aus einem elektrisch nicht leitendem Material aufweist, eine poröse, nicht elektrisch leitfähige Beschichtung aus durch einen anorganischen Kleber miteinander und mit dem Substrat verklebten Oxidpartikeln, die zumindest ein Oxid, ausgewählt aus Al₂O₃, ZrO₂ und SiO₂ aufweisen, aufweist, welcher dadurch gekennzeichnet ist, dass in der keramischen Beschichtung neben den Oxidpartikel von Al₂O₃, ZrO₂ und/oder SiO₂ auch Polymerpartikel vorhanden sind, die bei der Herstellung der Membran nicht die Oxidpartikel benetzen und eine im Wesentlichen kugelförmige Struktur behalten.

Ebenso ist Gegenstand der vorliegenden Erfindung ein Verfahren zur Herstellung eines erfindungsgemäßen Separators, welches dadurch gekennzeichnet ist, dass ein Substrat, welches Fasern aus einem elektrisch nicht leitenden Material und Zwischenräume zwischen den Fasern aufweist, mit einer keramischen Beschichtung versehen wird, wofür auf und in das Substrat eine Suspension aufgebracht wird und diese durch zumindest einmaliges Erwärmen auf und im Substrat verfestigt wird, wobei die Suspension ein Sol und zumindest zwei in dem Sol suspendierte Fraktionen von Partikel aufweist, von denen die erste Fraktion Oxidpartikel ausgewählt aus den Oxiden der Elemente Al, Zr und/oder Si aufweist und von denen die zweite Fraktion Polymerpartikel aufweist.

Außerdem ist Gegenstand der vorliegenden Erfindung die Verwendung eines erfindungsgemäßen Separators als Separator in Batterien sowie Lithiumbatterien, die einen erfindungsgemäßen Separator aufweisen, und Fahrzeuge, die solche Batterien aufweisen.

Der erfindungsgemäße Separator hat den Vorteil, dass er gegenüber handelsüblichen keramischen Separatoren verbesserte Eigenschaften aufweist. So weist der erfindungsgemäße Separator eine verbesserte Laminierbarkeit im Kontakt mit Polyvinylidenfluorid (PVDF) enthaltenden Elektroden auf. Zudem zeichnet sich der erfindungsgemäße Separator durch eine verbesserte Biegbarkeit und eine höhere Knicktoleranz aus. Auch die Durchstoßfestigkeit kann bei den erfindungsgemäßen Separatoren größer sein als bei herkömmlichen keramischen bzw. hybriden Separatoren.

Ein weiterer Vorteil des erfindungsgemäßen Separators liegt darin, dass beim Schneiden deutlich weniger Keramik-Staub anfällt, als beim Schneiden von herkömmlichen keramischen Separatoren.

Das elektrochemische Verhalten des erfindungsgemäßen Separators ändert sich kaum gegenüber den Eigenschaften eines Separators, der an Stelle der Polymerpartikel einen gleichen Volumenanteil an Oxidpartikeln aufweist, da die Eigenschaften des Separators überwiegend durch die Porenstruktur bestimmt werden. Die Benetzbarkeit des erfindungsgemäßen Separators verändert sich im Wesentlichen nur im mikroskopischen Bereich in direkter Umgebung der Polymerpartikel. Die Benetzbarkeit des gesamten Separators, bleibt hingegen (nahezu) unverändert, so dass makroskopisch die Eigenschaften eines erfindungsgemäßen Separators gegenüber den Eigenschaften eines Separators ohne Polymerpartikel in der keramischen Beschichtung (nahezu) unverändert sind.

Nachfolgend wird das erfindungsgemäße Verfahren beispielhaft beschrieben, ohne dass die Erfindung, deren Schutzbereich sich aus den Ansprüchen und der Beschreibung ergibt, darauf beschränkt sein soll. Auch die Ansprüche selbst gehören zum Offenbarungsgehalt der vorliegenden Erfindung. Sind nachfolgend Bereiche, allgemeine Formeln oder Verbindungsklassen angegeben, so sollen diese nicht nur die entsprechenden Bereiche oder Gruppen von Verbindungen erfassen, die explizit erwähnt sind, sondern auch alle Teilbereiche und Teilgruppen von Verbindungen, die durch Weglassen von einzelnen Werten (Bereichen) oder Verbindungen erhalten werden können.

Der erfindungsgemäße Separator, der auf einem Substrat und in den Zwischenräumen des Substrats, welches Fasern aus einem elektrisch nicht leitendem Material aufweist, eine poröse, nicht elektrisch leitfähige Beschichtung aus durch einen anorganischen Kleber miteinander und mit dem Substrat verklebten Oxidpartikeln, die zumindest ein Oxid, ausgewählt aus Al₂O₃, ZrO₂ und SiO₂ aufweisen, aufweist, zeichnet sich dadurch aus, dass in der keramischen Beschichtung neben den Oxidpartikel von Al₂O₃, ZrO₂ und/oder SiO₂ auch Polymerpartikel vorhanden sind.

Als Polymerpartikel können z. B. Partikel von Polymereren und Copolymeren, ausgewählt aus PVDF, PP, PE und andere in Lithium Batterien stabile Polymere in dem erfindungsgemäßen Separator vorhanden sein.

Die im erfindungsgemäßen Separator vorhandenen Polymerpartikel weisen vorzugsweise eine Schmelztemperatur auf, die zwischen 100 °C und 250 °C liegt. Sie kann also auch niedriger liegen als die höchste Temperatur, die bei der Herstellung des Separators eingesetzt werden kann. Weisen die Polymerpartikel eine niedrigere Schmelztemperatur auf, so sind vorzugsweise solche Polymere vorhanden, die bei der Herstellung der Membran nicht die Oxidpartikel benetzen und bevorzugt eine im Wesentlichen kugelförmige Struktur behalten. Eine Benetzung der Oxidpartikel durch die Polymere würde zu einem Separator führen, der eine durch das Polymer vorgegebene Benetzbarkeit hätte und der sich verhalten würde wie ein hoch keramisch gefüllter Polymerseparator. Vorzugsweise weisen die Polymerpartikel eine Schmelztemperatur von kleiner 200 °C, vorzugsweise von kleiner 180 °C und ganz besonders bevorzugt von 100 bis 150 °C auf.

Der Anteil der Polymerpartikel in dem erfindungsgemäßen Separator ist vorzugsweise so groß, dass im Separator der Volumenanteil der Oxidpartikel zu den Polymerpartikeln von 2 zu 1 bis 100 zu 1, bevorzugt 5 zu 1 bis 50 zu 1 und besonders bevorzugt 10 zu 1 bis 20 zu 1 beträgt. Das Volumenverhältnis kann bei der Herstellung des Separators an Hand der eingesetzten Massen der Polymer- und Oxidpartikel bestimmt werden, indem über die Dichte und Masse der verwendeten Materialien das Volumen der Einzelkomponenten berechnet wird.

Die Polymerpartikel können eine mittlere Partikelgröße aufweisen, die dem 0,1 bis 30fachen, vorzugsweise dem 0,75 bis 25fachen, bevorzugt dem 0,9 bis 15fachen und besonders bevorzugt dem 1 bis 10fachen der mittleren Partikelgröße der Oxidpartikel entspricht. Die mittlere Partikelgröße der Oxidpartikel beträgt vorzugsweise von 0,1 bis 10 µm, bevorzugt von 0,5 bis 5 µm und besonders bevorzugt von 1 bis 3 µm.

Ganz besonders bevorzugt weist der erfindungsgemäße Separator ausschließlich Oxidpartikel und/oder Polymerpartikel auf, die eine mittlere Partikelgröße aufweisen, die kleiner ist als das 0,5fache, vorzugsweise kleiner als das 0,2fache und bevorzugt kleiner als das 0,1fache der Dicke des Separators.

Die mittlere Partikelgröße der Oxidpartikel und der Polymerpartikel kann mittels Laserkleinwinkelstreuung bei der Herstellung des Separators bestimmt werden. Am fertigen Separator kann die Partikelgröße der Polymerpartikel und der Oxidpartikel durch die Betrachtung mittels Raster-Elektronen-Mikroskop bestimmt werden.

Bevorzugt weisen die erfindungsgemäßen Separatoren Substrate auf, die flexibel sind und bevorzugt eine Dicke von weniger als 50 µm aufweisen. Durch die Flexibilität des Substrats wird gewährleistet, dass auch der erfindungsgemäße Separator flexibel sein kann. Solche flexiblen Separatoren sind dann insbesondere zur Herstellung von sogenannten Wickelzellen einsetzbar. Die Substrate weisen Zwischenräume auf. Insbesondere weisen die Substrate Zwischenräume die Poren darstellen auf, also Zwischenräume die in direkter oder indirekter Linie einen Durchtritt von Materie von einer Seite des Substrats zur anderen Seite ermöglichen.

Die Dicke des Substrats hat einen großen Einfluss auf die Eigenschaften des Separators, da zum einen die Flexibilität aber auch der Flächenwiderstand des mit Elektrolyt getränkten Separators von der Dicke des Substrats abhängig ist. Bevorzugt weist der erfindungsgemäße Separator deshalb Substrate auf, die eine Dicke von kleiner 30 µm, besonders bevorzugt kleiner 20 µm aufweisen. Um eine ausreichend hohe Leistungsfähigkeit der Batterien, insbesondere bei Lithiumionenbatterien erreichen zu können, hat es sich als vorteilhaft erwiesen, wenn der erfindungsgemäße Separator ein Substrat aufweist, das vorzugsweise eine Porosität von größer 40 %, bevorzugt von 50 bis 97 %, besonders bevorzugt von 60 bis 90 % und ganz besonders bevorzugt von 70 bis 90 % aufweist. Die Porosität ist dabei definiert als das Volumen des Substrats (100 %) minus dem Volumen der Fasern des Substrats, also dem Anteil am Volumen des Substrats, der nicht von Material ausgefüllt wird. Das Volumen des Substrats kann dabei aus den Abmessungen des Substrats berechnet werden. Das Volumen der Fasern ergibt sich aus dem gemessenen Gewicht des betrachteten Vlieses und der Dichte der Fasern. In einer besonders bevorzugten Ausführungsform des erfindungsgemäßen Separators ist das Substrat ein Vlies mit einer mittleren Porenweite von 5 bis 500 µm, vorzugsweise 10 bis 200 µm.

Das Substrat kann als nicht elektrisch leitfähige Fasern gewebte oder ungewebte Fasern von Polymeren, Naturfasern, Kohlenstofffasern, Glasfasern oder Keramikfasern aufweisen. Das Substrat weist vorzugsweise gewebte oder ungewebte Polymerfasern auf. Besonders bevorzugt weist das Substrat ein Polymergewebe oder -vlies auf bzw. ist ein solches Gewebe oder Vlies. Als Polymerfasern weist das Substrat vorzugsweise nicht elektrisch leitfähige Fasern von Polymeren auf, die vorzugsweise ausgewählt sind aus Polyacrylnitril (PAN), Polyamid, (PA), Polyester, wie z. B. Polyethylenterephthalat (PET) und/oder Polyolefin (PO), wie z. B. Polypropylen (PP) oder Polyethylen (PE) oder Mischungen solcher Polyolefine. Wenn das durchbrochene Substrat Polymerfasern umfasst, können aber auch andere als die oben genannten Polymerfasern eingesetzt werden, sofern sie sowohl die für die Herstellung der Separatoren erforderliche Temperaturstabilität aufweisen als auch unter den Betriebsbedingungen in einer elektrochemischen Zelle, vorzugsweise in einer Lithiumbatterie, stabil sind. Bei einer bevorzugten Ausführungsform weist der erfindungsgemäße Separator Polymerfasern auf, die eine Erweichungstemperatur von größer 100 °C und eine Schmelztemperatur von größer 110 °C aufweisen.

Das Substrat kann Fasern und/oder Filamente mit einem Durchmesser von 0,1 bis 150 µm, vorzugsweise 1 bis 20 µm, und/oder Fäden mit einem Durchmesser von 1,5 bis 15 µm, vorzugsweise 2,5 bis 7,5 µm, umfassen. Weist das Substrat Polymerfasern auf, so weisen diese vorzugsweise einen Durchmesser von 0,1 bis 10 µm, besonders bevorzugt von 1 bis 5 µm auf. Besonders bevorzugte Vliese, insbesondere Polymervliese, weisen ein Flächengewicht von kleiner 20 g/m², vorzugsweise von 5 bis 15 g/m² auf. Auf diese Weise wird eine besonders geringe Dicke und hohe Flexibilität des Substrats gewährleistet.

Besonders bevorzugt weist der erfindungsgemäße Separator ein Polymervlies als Substrat auf, welches eine Dicke von kleiner 30 µm, vorzugsweise mit einer Dicke von 10 bis 20 µm aufweist. Besonders wichtig für die Verwendung in einem erfindungsgemäßen Separator ist eine möglichst homogene Porenradienverteilung im Vlies. Eine möglichst homogene Porenradienverteilung im Vlies führt in Verbindung mit optimal abgestimmten Oxid-Partikeln bestimmter Größe zu einer optimierten Porosität des erfindungsgemäßen Separators.

Der anorganische Kleber in dem erfindungsgemäßen Separator ist bevorzugt ausgewählt aus Oxiden der Elemente Al, Si und/oder Zr. Der anorganische Kleber kann dabei Partikel mit einer mittleren Partikelgröße von kleiner 20 nm aufweisen und über ein partikuläres Sol hergestellt worden sein oder ein anorganisches Netzwerk der Oxide aufweisen, das über ein polymeres Sol hergestellt wurde.

Es kann vorteilhaft sein, wenn der erfindungsgemäße Separator zusätzlich ein anorganisches, Silizium aufweisendes Netzwerk aufweist, wobei das Silizium des Netzwerks über Sauerstoffatome an die Oxide der anorganischen Beschichtung und über einen organischen Rest an das Substrat, der Polymerfasern aufweist, gebunden ist. Ein solches Netzwerk kann z. B. erhalten werden, wenn bei der Herstellung des Separators ein Haftvermittler, z. B. auf Silan-Basis, eingesetzt wird und dieser Haftvermittler der bei der Herstellung üblichen thermischen Behandlung unterzogen wird.

Besonders bevorzugt weist die auf und in dem Substrat vorhandene poröse, elektrisch isolierende Beschichtung eine mittlere Porengröße im Bereich von 50 nm bis 5 µm und bevorzugt von 100 bis 1000 nm auf.

Es kann vorteilhaft sein, wenn die auf und in dem Substrat vorhandene poröse, nicht elektrisch leitende Beschichtung einen Film aus einem oder mehreren Polymeren aufweist. Vorzugsweise ist der Film so ausgestaltet, dass der Film die Oberfläche, insbesondere die inneren und äußeren Oberflächen der Beschichtung bedeckt. Unter der Oberfläche der Beschichtung kann sowohl die makroskopische Oberfläche der Schicht als auch die mikroskopische Oberfläche, also alle von außen zugänglichen Oberflächen (innere und äußere Oberflächen), wie z. B. Porenoberflächen verstanden werden. Bevorzugt weist die Beschichtung, vorzugsweise auf ihrer mikroskopischen Oberfläche, einen Film aus einem oder mehreren Polymeren auf, der vorzugsweise eine Dicke von 10 nm bis 5 µm aufweist. Der Film aus Polymeren kann eine offenporige, schaumartige Struktur aufweisen, die aufgrund ihrer guten Ionenleitfähigkeit bevorzugt ist. Eine solche schaumartige Struktur wird insbesondere beim Einsatz von PVDF oder PVDF-Copolymeren erhalten, wenn anorganische Partikel vorhanden sind. Durch den Polymerfilm kann die Handhabbarkeit und Festigkeit des erfindungsgemäßen Separators noch weiter gesteigert werden. Insbesondere kann die Staubbildung beim Schneiden und das Abplatzen der keramischen Beschichtung auch bei mehrmaligem Knicken oder Falten des Separators verringert werden. Die Benetzbarkeit eines so ausgerüsteten erfindungsgemäßen Separators wird naturgemäß im Wesentlichen durch die Benetzbarkeit des für den Film verwendeten Polymeren bestimmt, kann also der Benetzbarkeit von PP/PE als hydrophoben Polymer entsprechen, aber auch recht hydrophil sein, wie bei der Verwendung von PVDF-Copolymeren.

Die Haltbarkeit des Separators gegenüber Wärmeeinwirkung und damit auch die Sicherheit des Separators wird maßgeblich durch die Oxidpartikel der Beschichtung bestimmt. Außerdem wird die Porengröße im Wesentlichen durch die Beschichtung bzw. die Partikelgröße der in der Beschichtung vorhandenen Partikel bestimmt und lässt sich somit relativ fein einstellen. Zudem können für den Polymerfilm Polymere eingesetzt werden, die auf Grund ihrer Materialeigenschaften nicht oder nur schlecht geeignet sind, aus ihnen reine Polymerseparatoren oder keramikgefüllte Polymerseparatoren herzustellen, so dass sich der Bereich der verwendbaren Polymere für einen solchen Separator vergrößert.

Die erfindungsgemäßen Separatoren lassen sich ohne Beschädigung vorzugsweise auf jeden Radius bis herab zu 100 m, vorzugsweise auf einen Radius von 100 m bis herab zu 50 mm und ganz besonders bevorzugt auf einen Radius von 50 mm bis herab zu 0,5 mm biegen. Die erfindungsgemäßen Separatoren zeichnen sich außerdem dadurch aus, dass sie vorzugsweise eine Reißfestigkeit von mindestens 1 N/cm, bevorzugt von mindestens 3 N/cm und ganz besonders bevorzugt von größer 5 N/cm aufweisen. Die hohe Reißfestigkeit und die gute Biegbarkeit des erfindungsgemäßen Separators hat den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Vorzugsweise weist der erfindungsgemäße Separator eine Porosität von 30 bis 80 % auf. Die Porosität bezieht sich dabei auf die erreichbaren, also offenen Poren. Die Porosität kann dabei mittels der bekannten Methode der Quecksilber-Porosimetrie (in Anlehnung an DIN 66 133) bestimmt werden oder kann aus dem Volumen und der Dichte der verwendeten Einsatzstoffe errechnet werden, wenn davon ausgegangen wird, dass nur offene Poren vorliegen.

Die erfindungsgemäßen Separatoren weisen vorzugsweise eine Dicke von kleiner 50 µm, bevorzugt kleiner 40 µm, besonders bevorzugt eine Dicke von 5 bis 30 µm und ganz besonders bevorzugt eine Dicke von 10 bis 20 µm auf. Die Dicke des Separators hat einen großen Einfluss auf die Eigenschaften des Separators, da zum einen die Flexibilität zum anderen aber auch der Flächenwiderstand des mit Elektrolyt getränkten Separators von der Dicke des Separators abhängig ist. Durch die geringe Dicke wird ein besonders geringer elektrischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann.

Der Separator der vorliegenden Erfindung ist aufgrund seiner erfindungsgemäßen Ausgestaltung hervorragend geeignet für elektrochemische Zellen mit hoher Kapazität und hoher Energiedichte. Insbesondere ist der erfindungsgemäße Separator für elektrochemische Zellen geeignet, die auf der Übertragung von Alkali- und/oder Erdalkali-Metall-Ionen beruhen, wie z. B. Lithium-Metall- und Lithium-Ionen-Batterien. Daher ist es vorteilhaft, wenn diese Separatoren auch die für diese Anwendungen spezifischen Schutzmaßnahmen, wie die Unterbrechungseigenschaft und Kurzschlusseigenschaft mit hoher Kurzschlusstemperatur zeigen. Unter Unterbrechungseigenschaft oder Abschaltung ("shut-down") ist eine Maßnahme zu verstehen, bei der dem Separator für bestimmte Betriebstemperaturen auszusuchende und leicht schmelzende Stoffe, wie zum Beispiel thermoplastische Kunststoffe, einverleibt sein können. Bei einem Ansteigen der Betriebstemperatur durch Störungen wie Überladung, äußere oder innere Kurzschlüsse, können solche leicht schmelzenden Stoffe schmelzen und die Poren des Separators verstopfen. Somit wird der Ionenfluss durch den Separator teilweise oder vollständig blockiert und ein weiteres Ansteigen der Temperatur wird verhindert. Kurzschlusseigenschaft oder Zusammenbruch ("melt-down") bedeutet, dass der Separator bei einer Kurzschlusstemperatur vollständig schmilzt. Dann kann es zwischen großen Flächen der Elektroden einer elektrochemischen Zelle zu einem Kontakt und einem Kurzschluss kommen. Für einen sicheren Betrieb einer elektrochemischen Zelle mit hoher Kapazität und Energiedichte ist eine möglichst hohe Kurzschlusstemperatur wünschenswert. Der erfindungsgemäße Separator weist dabei einen bedeutenden Vorteil auf. Denn das Keramikmaterial das bei dem Separator der vorliegenden Erfindung an dem durchbrochenen Substrat haftet, besitzt einen Schmelzpunkt, der weit oberhalb des sicherheitsrelevanten Temperaturbereichs für elektrochemische Zellen liegt. Der Separator der vorliegenden Erfindung weist daher eine überragende Sicherheit auf.

Polymerseparatoren bringen beispielsweise die für Lithium-Batterien zur Zeit geforderte Sicherheit, indem sie ab einer bestimmten Temperatur (der Shut-Down-Temperatur, die bei ca. 120 °C liegt) jeglichen Stromtransport durch den Elektrolyten unterbinden. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion, die zur Explosion führen kann, zum erliegen. Wird die Zelle aufgrund äußerer Umstände aber weiter erwärmt, so wird bei ca. 150 bis 180 °C die melt-Down-Temperatur überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion, die häufig mit einer Explosion der Zelle endet, bzw. der entstehende Druck wird durch ein Überdruckventil (eine Berstscheibe) häufig unter Feuererscheinungen abgebaut.

Im Rahmen der vorliegenden Erfindung kann das flexible, durchbrochene Substrat des Separators Polymerfasern umfassen. Bei diesem hybriden Separator, der im Wesentlichen anorganische Beschichtung und polymeres Substratmaterial aufweist, kommt es zum Shut-Down (Abschaltung) wenn durch die hohe Temperatur das Polymergefüge des Substratmaterials schmilzt und in die Poren der anorganischen Beschichtung eindringt und diese dadurch verschließt. Zum sogenannten Melt-Down (Zusammenbruch) kommt es bei dem erfindungsgemäßen Separator dagegen nicht. Der erfindungsgemäße Separator erfüllt also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei der Ausführungsform mit dem erfindungsgemäßen hybriden Separator schmilzt allenfalls das polymere Substratmaterial, nicht aber das anorganische Material der Beschichtung. Somit läuft die Reaktion im Inneren der Batteriezelle nach einem solchen Unfall sehr viel moderater ab. Eine solche Batterie ist somit deutlich sicherer als eine mit einem Polymerseparator ausgerüstete. Dies kommt vor allem im mobilen Bereich zum Tragen.

Es kann vorteilhaft sein, wenn der Separator einen zusätzlichen nicht inhärenten Shut-Down-Mechanismus aufweist. Dieser kann z. B. dadurch realisiert werden, dass auf oder in dem Separator (auf der mikroskopischen Oberfläche der Beschichtung), vorzugsweise auf dem Separator eine sehr dünne Wachs- oder Polymerpartikelschicht sogenannter Abschaltpartikel, die bei einer gewünschten Abschalttemperatur schmelzen, vorhanden ist. Besonders bevorzugte Materialien, aus denen die Abschaltpartikel bestehen können, sind beispielweise natürliche oder künstliche Wachse, niedrigschmelzende Polymere, wie z. B. Polyolefine, wobei das Material der Abschaltpartikel so ausgewählt wird, dass die Partikel bei der gewünschten Abschalttemperatur aufschmelzen und die Poren des Separators verschließen, so dass ein weiterer Ionenfluss verhindert wird.

Vorzugsweise weisen die Abschaltpartikel eine mittlere Partikelgröße (D_{w}) auf, die größer oder gleich der mittleren Porengröße (dₛ) der Poren der porösen Beschichtung des Separator ist. Dies ist insbesondere deshalb vorteilhaft, weil so ein Eindringen und Verschließen der Poren der Separatorschicht, welches eine Reduktion des Porenvolumens und damit der Leitfähigkeit des Separators und auch der Leistungsfähigkeit der Batterie zur Folge hätte, verhindert wird. Die Dicke der Abschaltpartikelschicht ist nur in sofern kritisch, wenn eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von 2 D_{w} bis D_{w} beträgt. Ein so ausgerüsteter Separator weist ein primäres Sicherheitsmerkmal auf. Im Gegensatz zu den rein organischen Separatormaterialien kann dieser Separator aber nicht vollständig schmelzen und es kann somit nicht zum Melt-Down kommen. Diese Sicherheitsmerkmale sind aufgrund der sehr großen Energiemengen für Hochenergiebatterien sehr wichtig und werden deshalb häufig gefordert.

In einer weiteren Variante des erfindungsgemäßen Separators weist dieser auf der makroskopischen Oberfläche der Beschichtung, die Oxid-Partikel der Elemente Al, Si und/oder Zr sowie Polymerpartikel aufweist, eine poröse Abschaltschicht aus einem Material, das bei einer vorgegebenen Temperatur schmilzt und die Poren der anorganischen Schicht schließt, auf, wobei die Abschaltschicht durch ein poröses Flächengebilde gebildet wird.

Prinzipiell ist es möglich, dass die Abschaltschicht auf beiden Seiten des Separators vorhanden ist. Es hat sich aber als vorteilhaft erwiesen, wenn die Abschaltschicht nur auf einer Seite des erfindungsgemäßen Separators vorhanden ist. Eine einzige Abschaltschicht ist ausreichend, eine sichere Abschaltung im Bedarfsfall zu gewährleisten.

Die erfindungsgemäß auf der anorganischen Schicht vorhandene Abschaltschicht oder Abschaltpartikelschicht kann beispielweise aus natürlichen oder künstlichen Wachsen, (niedrigschmelzende) Polymeren, wie z. B. speziellen Polyolefinen, wie z. B. Polyethylen oder Polypropylen, oder Polymermischungen oder Mischungen bestehen, wobei das Material der Abschaltschicht so ausgewählt wird, dass die Abschaltschicht bei der gewünschten Abschalttemperatur aufschmilzt und die Poren des Separators verschließt, so dass ein weiterer Ionenfluss verhindert wird. Bevorzugte Materialien für die Abschaltschicht sind solche Materialien, die einen Schmelzpunkt von kleiner gleich 180 °C, vorzugsweise kleiner 130 °C aufweisen. Durch die Verwendung von Materialien, die den Shut-Down bei relativ niedrigen Temperaturen bewirken lässt sich ein Schmelzen oder Entzünden der die Batterien umgebenden Materialien, wie z. B. Gehäuse oder Kabel, weitestgehend vermeiden. Besonders bevorzugt weist der erfindungsgemäße Separator eine Abschaltschicht aus Polyethylen(-wachs) auf.

Die Dicke der Abschaltschicht ist prinzipiell beliebig, solange sichergestellt ist, dass eine Reduktion des Ionenflusses und damit der Leitfähigkeit des Separators, welche eine Reduktion der Leistungsfähigkeit der Batterie zur Folge hätte, verhindert wird. Die Dicke der Abschaltschicht ist nur in sofern kritisch, als dass eine zu dicke Schicht den Widerstand in dem Batteriesystem unnötig erhöhen würde. Um eine sichere Abschaltung zu erzielen, sollte die Abschaltschicht eine Dicke von 1 bis 20 µm, bevorzugt von 5 bis 10 µm aufweisen. Es kann vorteilhaft sein, wenn das Material der Abschaltschicht und zumindest Teile des Materials des Substrats identisch sind. Die Porosität der Abschaltschicht liegt vorzugsweise bei 20 bis 80 % und bevorzugt bei 40 bis 60 %.

Der erfindungsgemäße Separator kann z. B. durch das nachfolgend beschriebene erfindungsgemäße Verfahren erhalten werden. Dieses Verfahren basiert auf dem Verfahren zur Herstellung von Separatoren bzw. Membranen, wie es in WO 99/15262 prinzipiell beschrieben wird. Auf diese Schrift wird ausdrücklich verwiesen.

Das erfindungsgemäße Verfahren zur Herstellung eines Separators, zeichnet sich dadurch aus, dass ein Substrat, welches Fasern aus einem elektrisch nicht leitendem Material und Zwischenräume zwischen den Fasern aufweist, mit einer keramischen Beschichtung versehen wird, wofür auf und in das Substrat eine Suspension gebracht wird und diese durch zumindest einmaliges Erwärmen auf und im Substrat verfestigt wird, wobei die Suspension ein Sol und zumindest zwei in dem Sol suspendierte Fraktionen von Partikel aufweist, von denen die erste Fraktion Oxidpartikel ausgewählt aus den Oxiden der Elemente Al, Zr und/oder Si aufweist oder daraus besteht und von denen die zweite Fraktion Polymerpartikel aufweist oder daraus besteht.

Als Polymerpartikel können in dem erfindungsgemäßen Verfahren z. B. Partikel von Polymereren und Copolymeren, insbesondere ausgewählt aus PVDF, PP, PE und andere in Lithium Batterien stabilen Polymeren, eingesetzt werden. Vorzugsweise werden Polymerpartikel eingesetzt, die eine Schmelztemperatur aufweisen, die zwischen 100 °C und 250 °C liegt. Sie kann also niedriger liegen als die höchste Temperatur, die bei der Herstellung des Separators eingesetzt wird. Weisen die eingesetzten Polymerpartikel eine niedrigere Schmelztemperatur auf, so werden vorzugsweise solche Polymere eingesetzt, die bei der Herstellung der Membran nicht die Oxidpartikel benetzen und bevorzugt eine im Wesentlichen kugelförmige Struktur behalten. Solche Polymeren sind z. B. PE und PP und deren Copolymere. Eine Benetzung der Oxidpartikel durch die Polymere würde zu einem Separator führen, der eine durch das Polymer vorgegebene Benetzbarkeit hätte und der sich verhalten würde wie ein hoch keramisch gefüllter Polymerseparator. Bevorzugt eingesetzte Polymerpartikel weisen eine Schmelztemperatur von kleiner 200 °C, vorzugsweise von kleiner 180 °C und ganz besonders bevorzugt von 100 bis 150 °C auf.

Wird in dem erfindungsgemäßen Verfahren bei der Herstellung der Suspension zu dem Sol eine Polymerpartikelfraktion gegeben, deren Polymerpartikel eine höhere Schmelztemperatur aufweisen als die im Herstellprozess verwendete Verfestigungstemperatur, so wird ein Separator erhalten, der über eine kontinuierliche poröse keramische Phase (Beschichtung) verfügt, in der Polymerpartikel statistisch verteilt vorliegen, wie z. B. Kynar Flex^{®} 2801 von Arkema oder PVDF-Ethylencopolymer. Werden in dem erfindungsgemäßen Verfahren Polymerpartikel eingesetzt, die eine Schmelztemperatur niedriger als die Verfestigungstemperatur aufweisen, so werden, sofern die Rezeptur der Suspension so eingestellt ist, dass sich die Polymerpartikel im geschmolzenen Zustand nicht über die anderen Partikel spreiten, sondern als geschmolzene Polymerkugel erhalten bleiben, vergleichbare Strukturen erhalten. Geeignete Polymerpartikel mit relativ niedriger Schmelztemperatur sind beispielsweise solche aus PP und PE und deren Copolymere, die eingesetzt werden können, wenn die Suspension relativ hydrophil eingestellt wird, also z. B. ein geringer Anteil an Methyltriethoxysilan zur Herstellung des Sols eingesetzt wird.

Vorzugsweise werden so viele Polymerpartikel und Oxidpartikel zur Herstellung der Suspension eingesetzt, dass das Volumenverhältnis der Partikel der Oxidpartikelfraktion zu den Partikeln der Polymerpartikelfraktion größer 4 zu 1, vorzugsweise von 4 zu 1 bis 100 zu 1, bevorzugt 5 zu 1 bis 50 zu 1 und besonders bevorzugt 10 zu 1 bis 20 zu 1 beträgt. Das Volumenverhältnis kann durch Bestimmen der eingesetzten Massen an Polymer- und Oxidpartikel unter Berücksichtigung der Materialdichte, ermittelt werden.

Es kann vorteilhaft sein, wenn zumindest eine Oxidpartikelfraktion eingesetzt wird, deren Partikel eine mittlere Partikelgröße von 0,1 bis 10 µm, bevorzugt von 0,5 bis 5 µm und besonders bevorzugt von 1 bis 3 µm aufweisen. Besonders bevorzugt werden zur Herstellung der Suspension als Oxidpartikel Aluminiumoxidpartikel eingesetzt, die bevorzugt eine mittlere Partikelgröße von 0,5 bis 10 µm, vorzugsweise von 1 bis 4 µm aufweisen. AluminiumoxidPartikel im Bereich der bevorzugten Partikelgrößen werden beispielweise von der Firma Martinswerke unter den Bezeichnungen MZS 3 und MZS1 und von der Firma AlCoA unter der Bezeichnung CT3000 SG, CL3000 SG, CT1200 SG, CT800SG und HVA SG angeboten.

Als Polymerpartikelfraktion wird vorzugsweise eine Fraktion eingesetzt, deren Partikel eine mittlere Partikelgröße aufweist, die dem 0,1 bis 30fachen, vorzugsweise dem 0,75 bis 25fachen, bevorzugt dem 0,9 bis 15fachen und besonders bevorzugt dem 1 bis 10fachen der mittleren Partikelgröße der Oxidpartikel entspricht. Ganz besonders vorteilhaft kann das erfindungsgemäße Verfahren durchgeführt werden, wenn ausschließlich Oxidpartikel und/oder Polymerpartikel eingesetzt werden, die eine mittlere Partikelgröße aufweisen, die kleiner ist als das 0,5fache, vorzugsweise kleiner als das 0,2fache und bevorzugt kleiner als das 0,1fache der Dicke des Separators. Auf diese Weise wird sichergestellt, dass der Separator neben dem Substrat zumindest zwei Lagen von Partikeln aufweist.

In dem erfindungsgemäßen Verfahren kann das Auf- und Einbringen der Suspension auf das Substrat und in die Zwischenräume des Substrats z. B. durch Aufdrucken, Aufpressen, Einpressen Aufrollen, Aufrakeln, Aufstreichen, Tauchen, Spritzen oder Aufgießen erfolgen.

Das eingesetzte Substrat weist vorzugsweise eine Dicke von kleiner 30 µm, bevorzugt kleiner 20 µm und besonders bevorzugt eine Dicke von 10 bis 20 µm auf. Besonders bevorzugt werden als Substrate solche eingesetzt, wie sie bei der Beschreibung des erfindungsgemäßen Separators beschrieben wurden. Das eingesetzte poröse Substrat weist also besonders bevorzugt gewebte oder ungewebte Polymerfasern auf. Besonders bevorzugt wird ein Substrat eingesetzt, das ein Polymergewebe oder -vlies aufweist bzw. ein solches Gewebe oder Vlies ist. Bevorzugt weist das eingesetzte Substrat Polymerfasern auf, die eine Erweichungstemperatur von größer 100 °C und eine Schmelztemperatur von größer 110 °C aufweisen. Es kann vorteilhaft sein, wenn die Polymerfasern einen Durchmesser von 0,1 bis 10 µm, vorzugsweise von 1 bis 5 µm aufweisen. Besonders bevorzugt wird in dem erfindungsgemäßen Verfahren ein Substrat eingesetzt, das Fasern ausgewählt aus Polyacrylnitril, Polyester, Polyamid und/oder Polyolefin aufweist.

Die zur Herstellung der Beschichtung verwendete Suspension weist zumindest Partikel von Al₂O₃, ZrO₂ und/oder SiO₂, zumindest eine Fraktion von Polymerpartikeln und zumindest ein Sol, vorzugsweise ein Sol der Elemente Al, Zr und/oder Si auf, und wird durch Suspendieren der Partikel in zumindest einem dieser Sole hergestellt. Das Suspendieren kann durch intensives Mischen der Komponenten erfolgen.

Es hat sich herausgestellt, dass der Einsatz von handelsüblichen Oxidpartikeln unter Umständen zu unbefriedigenden Ergebnissen führt, da häufig eine sehr breite Korngrößenverteilung vorliegt. Es werden deshalb bevorzugt Metalloxidpartikel eingesetzt, die durch ein herkömmliches Verfahren, wie z. B. Windsichten und Hydroklassieren klassiert wurden. Bevorzugt werden als Oxidpartikel solche Fraktionen eingesetzt, bei denen der Grobkornanteil, welcher bis zu 10 % der Gesamtmenge ausmacht, durch Nasssiebung abgetrennt wurde. Dieser störende Grobkornanteil, der auch durch die bei der Herstellung der Suspension typische Verfahren wie etwa Mahlen (Kugelmühle, Attritormühle, Mörsermühle), Dispergieren (Ultra-Turrax, Ultraschall), Zerreiben oder Zerhacken nicht oder nur sehr schwer zerkleinert werden kann, kann z. B. bestehen aus Aggregaten, harten Agglomeraten, Mahlkugelabrieb. Durch die vorgenannten Maßnahmen wird erreicht, dass die elektrisch nicht leitende Beschichtung eine sehr gleichmäßige Porengrößenverteilung aufweist.

Die folgende Tabelle 1 gibt eine Übersicht, wie sich die Wahl der verschiedenen Aluminiumoxide auf die Porosität und die resultierende Porengröße der jeweiligen porösen anorganischen Beschichtung auswirkt. Zur Ermittlung dieser Daten wurden die entsprechenden Schlicker (Suspensionen oder Dispersionen) hergestellt und als reine Formkörper bei 200 °C getrocknet und verfestigt.

**Tabelle 1: Typische Daten von Keramiken in Abhängigkeit vom eingesetzten Pulvertyp**

| Al₂O₃-Typ | Porosität in % | Mittl. Porengröße in nm |
|---|---|---|
| AlCoA CL3000SG | 51 | 755 |
| AlCoA CT800SG | 53,1 | 820 |
| AlCoA HVA SG | 53,3 | 865 |
| AlCoA CL4400FG | 44,8 | 1015 |
| Martinsw. DN 206 | 42,9 | 1025 |
| Martinsw. MDS 6 | 40,8 | 605 |
| Martinsw. MZS 1 + Martinsw. MZS 3 = 1:1 | 47 | 445 |
| Martinsw. MZS 3 | 48 | 690 |

Unter der mittleren Porengröße und der Porosität ist die mittlere Porengröße und die Porosität zu verstehen, die nach der bekannten Methode der Quecksilber-Porosimetrie bestimmt werden kann, z. B. unter Verwendung eines Porosimeter 4000 von Carlo Erba Instruments. Der Quecksilber-Porosimetrie liegt die Washburn-Gleichung zu Grunde (E. W. Washburn, "Note on a Method of Determining the Distribution of Pore Sizes in a Porous Material", *Proc. Natl. Acad. Sci.,* **7**, 115 - 16 (1921)).

In der eingesetzten Suspension beträgt der Massenanteil der suspendierten Komponenten (also der Partikel) vorzugsweise zwischen 10 und 80 %, besonders bevorzugt zwischen 30 und 70 %.

Die Sole können durch Hydrolisieren zumindest einer (Vorläufer-)Verbindung der Elemente Zr, Al und/oder Si erhalten werden. Es kann vorteilhaft sein, die zu hydrolisierende Verbindung vor der Hydrolyse in Alkohol oder eine Säure oder eine Kombination dieser Flüssigkeiten zu geben. Als zu hydrolisierende Verbindung wird vorzugsweise zumindest ein Nitrat, ein Chlorid, ein Carbonat oder eine Alkoholatverbindung der Elemente Zr, Al und/oder Si hydrolisiert. Die Hydrolyse erfolgt vorzugsweise in Gegenwart von Wasser, Wasserdampf, Eis, Alkohol oder einer Säure oder eine Kombination dieser Verbindungen. Vorzugsweise werden die Sole durch Hydrolisieren einer Verbindung der Elemente Al, Zr oder Si mit Wasser oder einer mit Wasser verdünnten Säure erhalten, wobei die Verbindungen bevorzugt gelöst in einem nichtwässrigen, gegebenenfalls auch wasserfreien Lösemittel vorliegen und mit dem 0,1- bis 100fachen Molverhältnis an Wasser hydrolysiert werden.

In einer Ausführungsvariante des Herstellverfahrens für den erfindungsgemäßen Separator werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben.

Es wurde gefunden, dass ein Solsystem bzw. eine Suspension, welches bzw. welche im Benetzungsverhalten den Polymeren angepasst wurde, die Substratmaterialien, insbesondere die Vliesmaterialien vollständig durchtränkt und somit fehlerfreie Beschichtungen erhältlich sind. Bevorzugt erfolgt bei dem erfindungsgemäßen Verfahren deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z. B. Methanol, Ethanol oder Propanol oder Mischungen daraus, umfassen. Es sind aber auch andere Lösemittelgemische denkbar, die dem Sol bzw. der Suspension zugegeben werden können, um diese im Vernetzungsverhalten an das verwendete Vlies anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem und in einem polymeren Vliesmaterial führt. Solche guten Haftfestigkeiten sind mit partikulären Solsystemen normalerweise nicht erhältlich. Vorzugsweise werden deshalb Vliese, die Polymerfasern aufweisen, mittels Suspensionen beschichtet, die auf polymeren Solen basieren oder in einem vorgeschalteten Schritt durch Behandlung mit einem polymeren Sol mit einem Haftvermittler ausgerüstet wurden.

In einer weiteren Ausführungsvariante des Herstellverfahrens für einen erfindungsgemäß einsetzbaren Separator werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen wird die Hydrolyse vorzugsweise so durchgeführt, dass die zu hydrolisierende Verbindung mit dem 0,5 bis 10fachen Molverhältnis und bevorzugt mit dem halben Molverhältnis Wasser, Wasserdampf oder Eis, bezogen auf die hydrolisierbare Gruppen, der hydrolisierbaren Verbindung, hydrolisiert wird. Eine bis zu 10fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension oder als Haftvermittler in einem Vorbehandlungsschritt eingesetzt werden. Besonders bevorzugt wird eine Suspension zur Herstellung des erfindungsgemäßen Separators eingesetzt, der ein polymeres Sol einer Verbindung des Siliziums aufweist.

Sowohl die partikulären Sole als auch die polymeren Sole können als Sol in dem erfindungsgemäßen Verfahren zur Herstellung der Suspension eingesetzt werden. Neben den Solen, die wie gerade beschrieben erhältlich sind, können prinzipiell auch handelsübliche Sole, wie z. B. Zirkonnitratsol oder Silicasol eingesetzt werden.

Zur Verbesserung der Haftung der anorganischen Komponenten an Polymerfasern bzw. -vliesen als Substrat, aber auch zur Verbesserung der Haftung einer gegebenenfalls später aufzubringenden Abschaltschicht, kann es vorteilhaft sein, den eingesetzten Suspensionen Haftvermittler, wie z. B. organofunktionelle Silane, wie z. B. die Degussa-Silane GLYMO, GLYEO, MEMO, AMEO, VTEO oder Silfin, beizufügen. Das Beifügen von Haftvermittlern ist dabei bei Suspensionen auf Basis polymerer Sole bevorzugt. Als Haftvermittler sind insbesondere Verbindungen, ausgewählt aus den Octylsilanen, den Vinylsilanen, den aminfunktionalisierten Silanen und/oder den Glycidyl-funktionalisierten Silanen, wie z. B. die Dynasilane der Fa. Degussa einsetzbar. Besonders bevorzugte Haftvermittler für Polyethylen (PE) und Polypropylen (PP) sind Vinyl-, Methyl- und Octylsilane, wobei eine ausschließliche Verwendung von Methylsilanen nicht optimal ist. Die Haftvermittler müssen dabei so ausgewählt werden, dass die Verfestigungstemperatur unterhalb des Schmelz- oder Erweichungspunktes des als Substrat eingesetzten Polymeren und unterhalb dessen Zersetzungstemperatur liegt. Als Haftvermittler sind insbesondere die in Tabelle 2 aufgeführten Silane einsetzbar. Bevorzugt weisen erfindungsgemäße Suspensionen sehr viel weniger als 25 Gew.-%, vorzugsweise weniger als 10 Gew.-% Verbindungen auf, die als Haftvermittler fungieren können.

**Tabelle 2**

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

| | | |
|---|---|---|
| Mit: AMEO = 3-Aminopropyltriethoxysilan DAMO = 2-Aminoethyl-3-aminopropyltrimethoxysilan GLYMO = 3-Glycidyloxytrimethoxysilan GLYEO = 3-Glycidyloxytriethoxysilan MEMO = 3-methacryloxypropyltrimethoxysilan Silfin = Vinylsilan + Initiator + Katalysator VTEO = Vinyltriethoxysilan VTMO = Vinyltrimethoxysilan VTMOEO = Vinyltris(2-methoxyethoxy)silan | | |

Die durch das Aufbringen und Einbringen auf dem Substrat und in den Zwischenräumen des Substrats vorhandene Suspension kann z. B. durch Erwärmen auf 50 bis 350 °C verfestigt werden. Da bei der Verwendung polymerer Substratmaterialien die maximale Temperatur durch das Substratmaterial vorgegeben wird, ist diese entsprechend so anzupassen, dass das Substratmaterial nicht schmilzt oder erweicht. So wird je nach Ausführungsvariante des Verfahrens die auf und im Substrat vorhandene Suspension bevorzugt durch Erwärmen auf 100 bis 350 °C und ganz besonders bevorzugt durch Erwärmen auf 200 bis 280 °C verfestigt. Das Erwärmen der Suspension auf einem Polymervlies mit Fasern aus Polyester erfolgt vorzugsweise für 0,2 bis 10 Minuten bei einer Temperatur von 200 bis 220 °C. Das Erwärmen der Suspension auf einem Polymervlies mit Fasern aus Polyamid erfolgt vorzugsweise für 0,5 bis 10 Minuten bei einer Temperatur von 170 bis 200 °C. Das Erwärmen des Verbundes kann mittels erwärmter Luft, Heißluft, Infrarotstrahlung oder durch andere Erwärmungsmethoden nach dem Stand der Technik erfolgen.

Das Verfahren zur Herstellung von im erfindungsgemäßen Verfahren einsetzbaren Separatoren kann z. B. so durchgeführt werden, dass das Substrat von einer Rolle abgerollt wird, mit einer Geschwindigkeit von 1 m/h bis 2 m/s, vorzugsweise mit einer Geschwindigkeit von 0,5 m/min bis 20 m/min durch zumindest eine Apparatur, welche die Suspension auf und in das Substrat bringt, wie z. B. eine Walze, und zumindest eine weitere Apparatur, welche das Verfestigen der Suspension auf und in dem Substrat durch Erwärmen ermöglicht, wie z. B. ein elektrisch beheizter Ofen durchläuft und der so hergestellte Separator auf einer zweiten Rolle aufgerollt wird. Auf diese Weise ist es möglich, den Separator im Durchlaufverfahren herzustellen. Auch die Vorbehandlungsschritte können im Durchlaufverfahren unter Beibehaltung der genannten Parameter durchgeführt werden.

In einer besonders bevorzugten Ausführungsart des erfindungsgemäßen Verfahrens wird nach dem Verfestigen der Suspension die resultierende keramische Beschichtung zusätzlich zunächst mit einer Lösung eines Polymers oder einer Mischung von Polymeren behandelt. Anschließend wird das Lösemittel entfernt. Als Polymere sind alle löslichen Polymeren geeignet in dieser Ausführungsart des erfindungsgemäßen Verfahrens eingesetzt zu werden. Vorzugsweise werden Polymere eingesetzt, die ausgewählt sind aus Polyvinylidenfluorid (PVDF), PVDF-Copolymere, Polyethylen, Polypropylen, Wachse. Besonders bevorzugt wird als Polymer PVDF oder PVDF-Copolymer oder ein Gemisch dieser Polymere eingesetzt. Als Lösemittel können alle Lösemittel eingesetzt werden, die in der Lage sind das ausgewählte Polymer bzw. die ausgewählten Polymere zu lösen. Bevorzugte Lösemittel weisen einen relativ hohen Dampfdruck auf, so dass das Lösemittel leicht zu entfernen ist. Ganz besonders bevorzugt werden Lösemittel die möglichst keine oder nur eine geringe gesundheitsschädigende Wirkung auf Lebewesen haben. Mögliche einzusetzende Lösemittel können z. B. Kohlenwasserstoffe, wie z. B. Hexan oder Oktan, Carbonylverbindungen, wie z. B. Aceton, Ether, wie z. B. Tetrahydrofuran, Petrolether oder Diethylether sein. Bei der Verwendung der bevorzugten Polyolefine werden Kohlenwasserstoffe als Lösemittel bevorzugt und bei der Verwendung der bevorzugten PVDF-Copolymere werden bevorzugt Ketone, wie Aceton als Lösemittel eingesetzt.

Die Lösung des Polymers/Copolymers oder der Mischung von Polymeren/Copolymeren weist vorzugsweise kleiner 50 Massen-%, bevorzugt kleiner 10 Massen-%, besonders bevorzugt kleiner 5 Massen-% und ganz besonders bevorzugt von 0,5 bis 5 Massen-% an Polymeren und/oder Copolymeren auf.

Das Behandeln der keramischen Beschichtung mit der Polymerlösung kann z. B. durch Aufdrucken, Aufpressen, Einpressen Aufrollen, Aufrakeln, Aufstreichen, Tauchen, Spritzen oder Aufgießen erfolgen. Wenn die Polymerlösung auch in die Poren der keramischen Beschichtung eindringen soll, kann es vorteilhaft sein, wenn die Lösung eine Viskosität von kleiner 1000 mPas, vorzugsweise kleiner 100 mPas aufweist. Die Viskosität der eingesetzten Lösung wird vorzugsweise mit einem Rotations-Viskosimeter mit einem Kegel/Platte-Messsystem vom Typ RS150, Firma Haake und einer mittleren Scherrate von ca. 100 sec.⁻¹ in Anlehnung an DIN 53 019 bestimmt. Zum Einstellen der Viskosität der Lösung können z. B. hoch strukturierte pyrogene Oxide von SiO₂ oder Al₂O₃ wie z. B. Aerosil oder Aeroxide der Fa. Degussa der Lösung zugegeben werden.

Das Entfernen des Lösemittel kann bei Normaltemperatur oder erhöhter Temperatur erfolgen. Vorzugsweise erfolgt die Entfernung des Lösemittels durch Erwärmen des behandelten Separators auf eine Temperatur von 25 bis 110 °C, vorzugsweise von 35 bis 80 °C. Das Erwärmen wird vorzugsweise solange durchgeführt, bis das Lösemittel vollständig verdampft ist. Es kann vorteilhaft sein, die verdampften Lösemittel aufzufangen und zu kondensieren und das Kondensat zur erneuten Herstellung von Polymerlösung zu verwenden. Auf diese Weise kann eine Umweltbelastung weitestgehend verhindert und die Menge der notwendigen Einsatzstoffe deutlich reduziert werden.

Zur Einstellung der Dicke der resultierenden Schicht kann es vorteilhaft sein, die Behandlung der keramischen Beschichtung mit der Polymerlösung und das anschließende Entfernen des Lösemittels ein- oder mehrfach zu wiederholen.

Die erfindungsgemäßen Separatoren können, unabhängig davon, ob die nicht elektrisch leitfähige Beschichtung mit einem Polymerfilm ausgerüstet wurde oder nicht, in einer besonderen Ausführungsform des erfindungsgemäßen Verfahrens zusätzlich mit einer Abschaltschicht ausgerüstet werden. Die erfindungsgemäß hergestellten Separatoren weisen, wenn sie nicht unter Verwendung eines Haftvermittlers hergestellt wurden, häufig anorganische Beschichtungen auf, die einen sehr hydrophilen Charakter haben. Um eine gute Haftung der Abschaltschicht auch auf hydrophilen porösen anorganischen Schichten zu erreichen, sind mehrere Varianten möglich.

In einer Ausführungsvariante des erfindungsgemäßen Verfahren hat es sich als vorteilhaft erwiesen, die poröse anorganische Schicht vor dem Aufbringen der Abschaltschicht zu hydrophobieren. Die Herstellung hydrophober Membrane, die als Ausgangsmaterial für die Herstellung der erfindungsgemäßen Separatoren dienen können, wird beispielsweise in WO 99/62624 beschrieben.

In einer weiteren Ausführungsvariante des erfindungsgemäßen Verfahrens kann die poröse anorganische Schicht vor dem Aufbringen der Abschaltschicht auch mit anderen Haftvermittlern behandelt werden. Die Behandlung mit einem Haftvermittler kann dann ebenfalls wie oben beschrieben erfolgen, d. h. dass die poröse anorganische Schicht mit einem polymeren Sol, welches ein Silan als Haftvermittler aufweist, behandelt wird. Insbesondere kann die Behandlung in der Weise erfolgen, dass bei der Herstellung des Separators wie oben beschrieben Haftvermittler eingesetzt werden. Bevorzugt werden die Haftvermittler ausgewählt aus der Reihe der hydrolisierten oder nicht hydrolisierten funktionalisierten Alkyltrialkoxysilane. Ganz besonders werden MEMO, AMEO und/oder GLYMO als Haftvermittler eingesetzt.

Die Abschaltschicht kann z. B. ein poröses Flächengebilde oder eine Schicht aus Partikeln sein, wobei das Flächengebilde oder die Partikel aus einem Material bestehen, welches bei einer bestimmten Temperatur schmilzt. Die Abschaltschicht auf Basis eines porösen Flächengebildes wird auf der porösen anorganischen Schicht des Separators vorzugsweise dadurch erzeugt, dass als poröses Flächengebilde ein Gewebe, Gewirke, Filz, Vlies oder eine poröse Folie auf die poröse anorganische Schicht aufgebracht wird. Das Aufbringen der Abschaltschicht kann durch Auflegen oder Aufkaschieren des porösen Flächengebildes auf die poröse anorganische Schicht erfolgen. Das Kaschieren kann bei Raumtemperatur oder bei erhöhter Temperatur, die unterhalb der Schmelztemperatur des Materials des Flächengebildes liegt, durchgeführt werden. Beim Kaschieren können die oben genannten Haftvermittler als Kaschiermittel eingesetzt werden. Die Haftvermittler können aus der bekannten Reihe der Alkyltrialkoxysilane ausgewählt sein. Diese Haftvermittler liegen vorzugsweise in Form von Lösungen oder Solen vor und werden entweder zuerst auf Polymer oder Separator aufgebracht und dort verfestigt oder aber die Silane werden direkt vor bzw. bei dem Kaschieren eingebracht und so Polymer und Keramik verklebt. Geeignete Silane sind z. B. von der Degussa als reine Produkte oder als wässrige Lösungen des hydrolisierten Silans unter z. B. der Bezeichnung Dynasilan^{®} 2926, 2907 oder 2781 erhältlich.

In einer anderen bevorzugten Ausführungsart des erfindungsgemäßen Verfahrens wird der erfindungsgemäße Separator dadurch mit einer Abschaltfunktion ausgerüstet, dass Partikel als Abschaltpartikel aufgebracht und fixiert werden, die eine definierte, gewünschte Schmelztemperatur aufweisen. Wurden die erfindungsgemäßen Separatoren ohne Verwendung eines Haftvermittlers hergestellt, so weisen diese eine keramische Beschichtung auf, die häufig einen sehr hydrophilen Charakter hat. Um eine gute Haftung und gleichmäßige Verteilung der Abschaltpartikel in der Abschaltschicht auch auf hydrophilen porösen anorganischen Schichten zu erreichen, sind mehrere Varianten möglich.

Zum einen können Separatoren dadurch mit Abschaltpartikel ausgerüstet werden, dass ein hydrophober Separator aus einem entsprechenden hydrophilen Separator durch Behandlung mit einem Hydrophobierungsmittel erhalten wird und nachfolgend Abschaltpartikel aufgetragen werden. Des Weiteren ist es aber auch möglich, die Abschaltpartikel im Gemisch mit Haftvermittlern aufzubringen und durch eine geeignete Nachbehandlung, wie z. B. eine Trocknung, zu fixieren. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Schicht erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird. Die Trocknung muss so durchgeführt werden, dass die Abschaltpartikel nicht schmelzen.

Weitere Details zur Ausrüstung der erfindungsgemäßen Separatoren mit Abschaltschichten können den Dokumenten DE 102 38 945 (Abschaltpartikelschichten) und DE 103 47 567 (Abschaltschichten) entnommen werden, auf welche ausdrücklich verwiesen wird und deren Inhalt Bestandteil der Offenbarung der vorliegenden Erfindung sein sollen.

Die erfindungsgemäßen Separatoren bzw. die erfindungsgemäß hergestellten Separatoren können als Separator in Batterien, insbesondere als Separator in Lithiumbatterien, vorzugsweise Lithium-Hochleistungs- und Hochenergiebatterien eingesetzt werden. Solche Lithium-Batterien können als Elektrolyten Lithiumsalze mit großen Anionen in Carbonaten als Lösemittel aufweisen. Geeignete Lithiumsalze sind z. B. LiClO₄, LiBF₄, LiAsF₆ oder LiPF₆, wobei LiPF₆ besonders bevorzugt ist. Als Lösemittel geeignete organische Carbonate sind z. B. Ethylencarbonat, Propylencarbonat, Dimethylcarbonat, Ethylmethylcarbonat oder Diethylcarbonat oder Mischungen davon.

Lithiumbatterien, die einen erfindungsgemäßen Separator aufweisen, können insbesondere in Fahrzeugen, mit Elektroantrieb oder einer Hydbridantriebstechnik eingesetzt werden, wie z. B. Elektroautos oder Hybridautos.

Die vorliegende Erfindung wird durch die nachfolgenden Beispiele beschrieben, ohne darauf beschränkt zu sein.

### Beispiele

### Vergleichsbeispiel: Separator nach dem Stand der Technik

Zu 130 g Wasser und 15 g Ethanol wurden zunächst 30 g einer 5 Gew.-%igen, wässrigen HNO₃-Lösung, 10 g Tetraethoxysilan, 2,5 g Methyltriethoxysilan und 7,5 g Dynasilan GLYMO (Degussa AG) gegeben. In diesem Sol, das zunächst für einige Stunden gerührt wurde, wurden dann jeweils 250 g der Aluminiumoxide Martoxid MZS-1 (Martinswerke) suspendiert. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein 20 cm breites PET-Vlies (Freudenberg Vliesstoffe KG) mit einer Dicke von ca. 20 µm und einem Flächengewicht von etwa 15 g/m² wurde dann in einem kontinuierlichen Aufwalzverfahren (Bandgeschwindigkeit ca. 30 m/h, T = 200 °C) mit obigem Schlicker beschichtet. Man erhielt am Ende einen Separator mit einer mittleren Porenweite von 250 nm.

### Beispiel 1

Zu 130 g Wasser und 32 g Ethanol wurden zunächst 5 g einer konzentrierten HNO₃-Lösung, 10 g Tetraethoxysilan, 1 g Methyltriethoxysilan und 7,5 g Dynasilan GLYMO (Degussa AG) gegeben. In diesem Sol, das zunächst für einige Stunden gerührt wurde, wurden dann jeweils 250 g der Aluminiumoxide Martoxid MZS-1 (Martinswerke) und 18g PVDF-Copolymer-Pulver (Kynarflex 2801; Arkema GmbH; 140 °C MP) suspendiert. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein 20 cm breites PET-Vlies (Freudenberg Vliesstoffe KG) mit einer Dicke von ca. 20 µm und einem Flächengewicht von etwa 10 g/m² wurde dann in einem kontinuierlichen Aufwalzverfahren (Bandgeschwindigkeit ca. 30 m/h, T = 200 °C) mit obigem Schlicker beschichtet. Man erhielt am Ende einen Separator mit einer mittleren Porenweite von 250 nm.

### Beispiel 2

Zu 130 g Wasser und 32 g Ethanol wurden zunächst 5 g einer konzentrierten HNO₃-Lösung, 10 g Tetraethoxysilan, 1 g Methyltriethoxysilan und 7,5 g Dynasilan GLYMO (Degussa AG) gegeben. In diesem Sol, das zunächst für einige Stunden gerührt wurde, wurden dann jeweils 230 g der Aluminiumoxid ct 3000 SG der Fa. Alcoa und 18 g Polyolefin-Copolymer-Pulver (Vestowax A616; Degussa AG; 120°C MP; d50 = 5 - 6 µm) suspendiert. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein 20 cm breites PET-Vlies (Freudenberg Vliesstoffe KG) mit einer Dicke von ca. 20 µm und einem Flächengewicht von etwa 10 g/m² wurde dann in einem kontinuierlichen Aufwalzverfahren (Bandgeschwindigkeit ca. 30 m/h, T = 200 °C) mit obigem Schlicker beschichtet und dieser bei der genannten Temperatur verfestigt. Man erhielt am Ende einen Separator mit einer mittleren Porenweite von 100 nm.

### Beispiel 3

Eine Lösung von 3 Massen-% Kynarflex 2801 in Aceton wurde in einem kontinuierlichem Tränkverfahren auf einen Separator, welcher gemäß Beispiel 1 erhalten wurde, mit einer Geschwindigkeit von 1m/min aufgetragen und bei einer Temperatur von 60 °C im Heißluftstrom getrocknet.

### Beispiel 4

Eine Lösung von 0,5 Massen-% Kynarflex 2801 in Aceton wurde in einem kontinuierlichem Tränkverfahren auf einen Separator, welcher gemäß Beispiel 1 erhalten wurde, mit einer Geschwindigkeit von 5m/min aufgetragen und bei einer Temperatur 80 °C im Heißluftstrom getrocknet.

### Beispiel 5

Eine Lösung von 3 Massen-% Vestowax A616 in Cyclohexan, wobei die nicht vollständig gelösten teilvernetzten nicht löslichen Partikel über einen Filter abgetrennt wurden, wurde in einem kontinuierlichem Tränkverfahren auf einen Separator, welcher gemäß Beispiel 2 erhalten wurde, mit einer Geschwindigkeit von 10m/min aufgetragen und bei einer Temperatur von 100 °C im Heißluftstrom getrocknet.

### Beispiel 6: Charakterisierung der Separatoren

Die in den Beispielen 1 bis 5 sowie im Vergleichsbeispiel hergestellten Separatoren wurden wie nachfolgend beschrieben charakterisiert. Die Ergebnisse sind in Tabelle 3 zusammengestellt.

### Bestimmung der MacMullin-Zahl:

Hierzu wurde bei 30°C zunächst mit einem Konduktometer (Metrohm) die Leitfähigkeit LF1 des reinen Elektrolyten (eine 0,01 molare Lösung an LiClO₄ in Propylencarbonat) bestimmt. Dann wurde der Separator mit Elektrolyt getränkt und hiervon ebenfalls die Leitfähigkeit LF2 bestimmt. Die MacMullin-Zahl ist das Verhältnis dieser beiden Leitfähigkeiten LF1/LF2.

### Bestimmung des BP:

Der Bubble Point (BP) ist der Druck in bar, bei dem eine Gasblase durch eine vollständig benetzte Membrane (Separator) tritt. Er ist ein Maß für die Größe der größten Pore bzw. Fehlstelle in einer Membrane. Je kleiner der BP desto größer ist die größte Pore bzw. der größte Fehler (Loch).

Zur Messung des Bubble Points wurde eine Membrane mit einer Größe von 30 mm Durchmesser zugeschnitten. Die zugeschnittene Membrane wurde in der Benetzungsflüssigkeit (VE-Wasser) wenigstens einen Tag lang gelagert. Die so vorbereitete Membrane wurde in einer Apparatur zwischen einer runden Sintermetallscheibe mit einem BP von ca. 0 bar (Messung ohne Membran), die als Stützmaterial dient, und einer Silikongummidichtung eingebaut, wobei die Apparatur oberhalb der Membran ein nach oben offenes Gefäß aufwies, welches den gleichen Querschnitt aufwies wie die Membran und mit 2 cm mit VE-Wasser gefüllt wurde, und unterhalb der Membran ein zweites Gefäß aufwies, welches ebenfalls den gleichen Querschnitt wie die Membran aufwies, und welches mit einem Lufteinlass ausgerüstet war, über welchen Pressluft über ein Druckminderventil in das Gefäß eingeleitet werden konnte. Die Membran wurde dabei unter der Sintermetallscheibe eingebaut, sodass die Sintermetallscheibe den Boden des oberen Gefäßes bildete und die Membrane das untere Gefäß abschloss. In 0,1 bar Schritten wurde anschließend der Druck im unteren Gefäß erhöht, wobei zwischen jeder Druckerhöhung eine halbe Minute liegt. Nach jeder Druckerhöhung wurde die Wasseroberfläche im oberen Gefäß für ca. eine halbe Minute beobachtet. Beim Auftreten der ersten kleinen Gasbläschen an der Wasseroberfläche ist der Druck des BP erreicht und die Messung wurde abgebrochen.

### Bestimmung der Gurley-Zahl

Die Gurley-Zahl wurde in der gleichen Apparatur bestimmt wie der BP. Bei der Bestimmung der Gurley-Zahl wurde aber die Zeit t bestimmt, die ein Gasvolumen von 100 ml benötigt um durch eine Fläche von 6,45 cm² (bei einem Druck von 31 cm Wassersäule des Gases) zu strömen. Die Zeit t ist die Gurley-Zahl.

### Knicktoleranz

Die Bestimmung der Knicktoleranz erfolgt dadurch, dass der zu untersuchende Separator gefaltet wird und auf den entstandenen Knick ein Gewicht mit 1 kg Masse und einer kreisförmigen Grundfläche von 10 cm Durchmesser für eine Minute gestellt wird. Das Gewicht wird dabei so positioniert, dass das Gewicht mit seinem Durchmesser genau auf dem Knick positioniert ist. Nach Abnehmen des Gewichts wurde der Separator auseinandergefaltet, glattgestrichen und auf einen eingeschalteten Leuchtschirm gelegt. Sodann wurde mit einem Lichtmikroskop der Knick an der Stelle, die vom Gewicht beschwert gewesen war, begutachtet. Es wurden die Stellen des Knicks markiert, an denen das Licht des Leuchtschirms ungehindert durch den Separator dringen konnte und somit durch das Knicken Löcher entstanden waren (Zur Blindprobe kann jeder Separator zunächst an der zu knickenden Stelle mittels des Leuchtschirms darauf überprüft werden, dass vor dem Knicken keine Löcher/Fehlstellen vorhanden sind). Die Länge des so markierten Knicks wurde addiert. Betrug die markierte Länge weniger als 1 cm wurde die Knicktoleranz mit gut beurteilt. Betrug die markierte Länge von 1 bis 5 cm wurde die Knicktoleranz mit mittelmäßig beurteilt. Betrug die markierte Länge mehr als 5 cm (50 %) wurde die Knicktoleranz mit schlecht beurteilt.

**Tabelle 3: Ergebnisse der Charakterisierung der in den Beispielen und im Vergleichsbeispiel hergestellten Separatoren.**

| Separator gemäß | LF* MS/cm | MacMullin* | Dicke µm | BP bar | Auftrag g/m² | Gurley s | Knicktoleranz |
|---|---|---|---|---|---|---|---|
| Vergleich | 0,039 | 3,4 | 25 | 1,5 | 30 | 17 | Schlecht |
| Beispiel 1 | 0,046 | 2,9 | 24 | 1,0 | 25 | 14 | Mittel |
| Beispiel 2 | 0,044 | 3,1 | 25 | 1,0 | 20 | 32 | Mittel |
| Beispiel 3 | 0,035 | 3,9 | 25 | 1,0 | 26 | 19 | Gut |
| Beispiel 4 | 0,034 | 3,9 | 26 | 1,0 | 27 | 22 | Gut |
| Beispiel 5 | 0,031 | 4,2 | 26 | 1,2 | 22 | 41 | Gut |

| | | | | | | | |
|---|---|---|---|---|---|---|---|
| * Die Proben wurden zuvor wasserfrei getrocknet, als Elektrolyt dient eine 0,01 molare Lösung an LiClO₄ in Propylencarbonat | | | | | | | |

## Patentansprüche

1. Separator, der auf einem Substrat und in den Zwischenräumen des Substrats, welches Fasern aus einem elektrisch nicht leitendem Material aufweist, eine poröse, nicht elektrisch leitfähige Beschichtung aus durch einen anorganischen Kleber miteinander und mit dem Substrat verklebten Oxidpartikeln, die zumindest ein Oxid, ausgewählt aus Al₂O₃, ZrO₂ und SiO₂ aufweisen, aufweist,
**dadurch gekennzeichnet,**
**dass** in der keramischen Beschichtung neben den Oxidpartikel von Al₂O₃, ZrO₂ und/oder SiO₂ auch Polymerpartikel vorhanden sind, die
bei der Herstellung der Membran nicht die Oxidpartikel benetzen und eine im Wesentlichen kugelförmige Struktur behalten.

2. Separator nach Anspruch 1,
**dadurch gekennzeichnet,**
**dass** die Polymerpartikel eine Schmelztemperatur von größer 100 °C aufweisen.

3. Separator gemäß Anspruch 1 oder 2,
**dadurch gekennzeichnet,**
**dass** im Separator der Volumenanteil der Oxidpartikel zu den Polymerpartikeln von 2 zu 1 bis 100 zu 1 beträgt.

4. Separator nach zumindest einem der Ansprüche 1 bis 3,
**dadurch gekennzeichnet,**
**dass** die Polymerpartikel eine mittlere Partikelgröße aufweisen, die dem 0,1 bis 30fachen der mittleren Partikelgröße der Oxidpartikel entspricht.

5. Separator nach Anspruch 4,
**dadurch gekennzeichnet,**
**dass** der Separator ausschließlich Polymerpartikel aufweist, die eine mittlere Partikelgröße aufweisen, die kleiner ist als das 0,5fache der Dicke des Separators.

6. Separator nach zumindest einem der Ansprüche 1 bis 5,
**dadurch gekennzeichnet,**
**dass** das Substrat ein Polymervlies ist, welches Polymerfasern, die ausgewählt sind aus Fasern von Polyacrylnitril, Polyamid, Polyester und/oder Polyolefin, aufweist.

7. Separator nach zumindest einem der Ansprüche 1 bis 6,
**dadurch gekennzeichnet,**
**dass** der anorganische Kleber ausgewählt ist aus Oxiden der Elemente Al, Si und/oder Zr.

8. Separator nach zumindest einem der Ansprüche 1 bis 7,
**dadurch gekennzeichnet,**
**dass** die keramische Beschichtung an den inneren und äußeren Oberflächen einen Film aus Polymeren aufweist.

9. Separator nach Anspruch 8,
**dadurch gekennzeichnet,**
**dass** der Film eine Dicke von 10 nm bis 5 µm aufweist.

10. Separator nach Anspruch 8 oder 9,
**dadurch gekennzeichnet,**
**dass** der Film eine schaumartige Struktur aufweist.

11. Verfahren zur Herstellung eines Separators gemäß zumindest einem der Ansprüche 1 bis 10,
**dadurch gekennzeichnet,**
**dass** ein Substrat, welches Fasern aus einem elektrisch nicht leitenden Material und Zwischenräume zwischen den Fasern aufweist, mit einer keramischen Beschichtung versehen wird, wofür auf und in das Substrat eine Suspension aufgebracht wird und diese durch zumindest einmaliges Erwärmen auf und im Substrat verfestigt wird, wobei die Suspension ein Sol und zumindest zwei in dem Sol suspendierte Fraktionen von Partikel aufweist, von denen die erste Fraktion Oxidpartikel ausgewählt aus den Oxiden der Elemente Al, Zr und/oder Si aufweist und von denen die zweite Fraktion Polymerpartikel aufweist, wobei
Polymere eingesetzt werden, die bei der Herstellung der Membran nicht die Oxidpartikel benetzen und eine im Wesentlichen kugelförmige Struktur behalten.

12. Verfahren nach Anspruch 11,
**dadurch gekennzeichnet,**
**dass** der Volumenanteil der eingesetzten Partikel der Oxidpartikelfraktion zu den eingesetzten Partikeln der Polymerpartikelfraktion von 2 zu 1 bis 100 zu 1 beträgt.

13. Verfahren nach Anspruch 11 oder 12,
**dadurch gekennzeichnet,**
**dass** zumindest eine Oxidpartikelfraktion eingesetzt wird, deren Partikel eine mittlere Partikelgröße von 0,1 bis 10 µm aufweisen.

14. Verfahren nach zumindest einem der Ansprüche 11 bis 13,
**dadurch gekennzeichnet,**
**dass** eine Polymerpartikelfraktion eingesetzt wird, deren Partikel eine mittlere Partikelgröße aufweist, die dem 0,1 bis 30fachen der mittleren Partikelgröße der suspendierten Oxidpartikel entspricht.

15. Verfahren nach zumindest einem der Ansprüche 11 bis 14,
**dadurch gekennzeichnet,**
**dass** der eingesetzten Suspension vor dem Aufbringen auf das Substrat zusätzlich noch ein Haftvermittler, der ausgewählt ist aus den organofunktionellen Silanen, beigefügt wird.

16. Verfahren nach zumindest einem der Ansprüche 11 bis 15,
**dadurch gekennzeichnet,**
**dass** als Substrat ein Polymervlies eingesetzt wird, das Fasern ausgewählt aus Polyacrylnitril, Polyester, Polyamid und/oder Polyolefin aufweist.

17. Verfahren nach zumindest einem der Ansprüche 11 bis 16,
**dadurch gekennzeichnet,**
**dass** das eingesetzte Sol durch Hydrolisieren einer Vorläuferverbindung eines der Elemente Al, Zr oder Si mit Wasser oder einer mit Wasser verdünnten Säure erhalten werden.

18. Verfahren nach zumindest einem der Ansprüche 11 bis 17,
**dadurch gekennzeichnet,**
**dass** die auf und im Substrat vorhandene Suspension durch Erwärmen auf 50 bis 350 °C verfestigt wird.

19. Verfahren nach zumindest einem der Ansprüche 11 bis 18,
**dadurch gekennzeichnet,**
**dass** nach dem Verfestigen der Suspension die resultierende keramische Beschichtung zunächst mit einer Lösung eines Polymers behandelt wird und anschließend das Lösemittel entfernt wird.

20. Verwendung eines Separators gemäß zumindest einem der Ansprüche 1 bis 10 als Separator in Batterien.

21. Lithiumbatterie, einen Separator gemäß zumindest einem der Ansprüche 1 bis 10 aufweisend.

22. Fahrzeug, eine Lithiumbatterie gemäß Anspruch 21 aufweisend.

## Claims

1. Separator which has, on a substrate and in the voids of the substrate, which comprises fibres of an electrically nonconductive material, a porous electrically nonconductive coating comprising oxide particles which are adhesively bonded to one another and to the substrate by an inorganic adhesive and comprise at least one oxide selected from Al₂O₃, ZrO₂ and SiO₂, **characterized in that** polymer particles which do not wet the oxide particles during the production of the membrane and retain a substantially spherical structure are also present in the ceramic coating in addition to the oxide particles of Al₂O₃, ZrO₂ and/or SiO₂.

2. Separator according to Claim 1, **characterized in that** the polymer particles have a melting point of more than 100°C.

3. Separator according to Claim 1 or 2, **characterized in that**, in the separator, the volume fraction of the oxide particles to the polymer particles is from 2:1 to 100:1.

4. Separator according to at least one of Claims 1 to 3, **characterized in that** the polymer particles have a mean particle size which corresponds to from 0.1 to 30 times the mean particle size of the oxide particles.

5. Separator according to Claim 4, **characterized in that** the separator exclusively comprises polymer particles which have a mean particle size which is smaller than 0.5 times the thickness of the separator.

6. Separator according to at least one of Claims 1 to 5, **characterized in that** the substrate is a nonwoven polymer fabric which comprises polymer fibres which are selected from fibres of polyacrylonitrile, polyamide, polyester and/or polyolefin.

7. Separator according to at least one of Claims 1 to 6, **characterized in that** the inorganic adhesive is selected from oxides of the elements Al, Si and/or Zr.

8. Separator according to at least one of Claims 1 to 7, **characterized in that** the ceramic coating on the internal and external surfaces comprises a film of polymers.

9. Separator according to Claim 8, **characterized in that** the film has a thickness of from 10 nm to 5 µm.

10. Separator according to Claim 8 or 9, **characterized in that** the film has a foam-like structure.

11. Method for the production of a separator according to at least one of Claims 1 to 10, **characterized in that** a substrate which comprises fibres of an electrically nonconductive material and voids between the fibres is provided with a ceramic coating, for which purpose a suspension is applied on and in the substrate and said suspension is solidified by heating at least once on or in the substrate, the suspension comprising a sol and at least two particle fractions suspended in the sol, the first fraction of which comprises oxide particles selected from the oxides of the elements Al, Zr and/or Si and the second fraction of which comprises polymer particles, using polymers which do not wet the oxide particles during the production of the membrane and retain a substantially spherical structure.

12. Method according to Claim 11, **characterized in that** the proportion by volume of the particles of the oxide particle fraction used to the particles of the polymer particle fraction used is from 2:1 to 100:1.

13. Method according to Claim 11 or 12, **characterized in that** at least one oxide particle fraction whose particles have a mean particle size of from 0.1 to 10 µm is used.

14. Method according to at least one of Claims 11 to 13, **characterized in that** a polymer particle fraction whose particles have a mean particle size which corresponds to from 0.1 to 30 times the mean particle size of the suspended oxide particles is used.

15. Method according to at least one of Claims 11 to 14, **characterized in that** an adhesion promoter which is selected from the organofunctional silanes is also added to the suspension used, prior to application to the substrate.

16. Method according to at least one of Claims 11 to 15, **characterized in that** the substrate used is a nonwoven polymer fabric which comprises fibres selected from a polyacrylonitrile, polyester, polyamide and/or polyolefin.

17. Method according to at least one of Claims 11 to 16, **characterized in that** the sol used is obtained by hydrolyzing a precursor compound of one of the elements Al, Zr or Si with water or an acid diluted with water.

18. Method according to at least one of Claims 11 to 17, **characterized in that** the suspension present on and in the substrate is solidified by heating to 50 to 350°C.

19. Method according to at least one of Claims 11 to 18, **characterized in that**, after solidification of the suspension, the resulting ceramic coating is first treated with a solution of a polymer and the solvent is then removed.

20. Use of a separator according to at least one of Claims 1 to 10 as a separator in batteries.

21. Lithium battery, comprising a separator according to at least one of Claims 1 to 10.

22. Vehicle, comprising a lithium battery according to Claim 21.

## Revendications

1. Séparateur, qui comporte sur un support et dans les espaces intermédiaires du support, qui comporte des fibres à base d'un matériau non électroconducteur, un revêtement poreux, non électroconducteur, à base de particules d'oxydes collées les unes aux autres et avec le support au moyen d'une colle inorganique, qui comportent au moins un oxyde choisi parmi Al₂O₃, ZrO₂ et SiO₂,
**caractérisé en ce que**
dans le revêtement céramique sont présentes, en plus des particules d'oxydes d'Al₂O₃, ZrO₂ et/ou SiO₂,
également des particules de polymère qui lors de la production de la membrane ne mouillent pas les particules d'oxydes et conservent une structure essentiellement sphérique.

2. Séparateur selon la revendication 1,
**caractérisé en ce que**
les particules de polymère présentent une température de fusion supérieure à 100 °C.

3. Séparateur selon la revendication 1 ou 2,
**caractérisé en ce que**
dans le séparateur la proportion en volume des particules d'oxydes par rapport aux particules de polymère vaut de 2 : 1 à 100 : 1.

4. Séparateur selon au moins l'une quelconque des revendications 1 à 3,
**caractérisé en ce que**
les particules de polymère présentent une taille moyenne de particule qui correspond à 0,1 à 30 fois la taille moyenne de particule des particules d'oxydes.

5. Séparateur selon la revendication 4,
**caractérisé en ce que**
le séparateur comporte exclusivement des particules de polymère qui présentent une taille moyenne de particule qui est inférieure à 0,5 fois l'épaisseur du séparateur.

6. Séparateur selon au moins l'une quelconque des revendications 1 à 5,
**caractérisé en ce que**
le support est un non-tissé polymère qui comporte des fibres de polymère qui sont choisies parmi des fibres de polyacrylonitrile, polyamide, polyester et/ou polyoléfine.

7. Séparateur selon au moins l'une quelconque des revendications 1 à 6,
**caractérisé en ce que**
la colle inorganique est choisie parmi des oxydes des éléments Al, Si et/ou Zr.

8. Séparateur selon au moins l'une quelconque des revendications 1 à 7,
**caractérisé en ce que**
le revêtement céramique sur les surfaces interne et externe comporte un film à base de polymères.

9. Séparateur selon la revendication 8,
**caractérisé en ce que**
le film présente une épaisseur de 10 nm à 5 µm.

10. Séparateur selon la revendication 8 ou 9,
**caractérisé en ce que**
le film présente une structure alvéolaire.

11. Procédé pour la production d'un séparateur selon au moins l'une quelconque des revendications 1 à 10,
**caractérisé en ce**
**qu'**on munit d'un revêtement céramique un support qui comporte des fibres à base d'un matériau non électroconducteur et des espaces intermédiaires entre les fibres, pour lequel on applique sur et dans le support une suspension et on la fait durcir sur et dans le support par chauffage au moins une fois, la suspension comportant un sol et au moins deux fractions de particules en suspension dans le sol, dont la première fraction comporte des particules d'oxydes choisies parmi les oxydes des éléments Al, Zr et/ou Si et dont la deuxième fraction comporte des particules de polymère,
en utilisant des polymères qui lors de la production de la membrane ne mouillent pas les particules d'oxydes et conservent une structure essentiellement sphérique.

12. Procédé selon la revendication 11,
**caractérisé en ce que**
la proportion en volume des particules utilisées de la fraction de particules d'oxydes par rapport aux particules utilisées de la fraction de particules de polymère vaut de 2 : 1 à 100 : 1.

13. Procédé selon la revendication 11 ou 12,
**caractérisé en ce**
**qu'**on utilise au moins une fraction de particules d'oxydes, dont les particules présentent une taille moyenne de particule de 0,1 à 10 µm.

14. Procédé selon au moins l'une quelconque des revendications 11 à 13,
**caractérisé en ce**
**qu'**on utilise une fraction de particules de polymère dont les particules présentent une taille moyenne de particule qui correspond à 0,1 à 30 fois la taille moyenne de particule des particules d'oxydes en suspension.

15. Procédé selon au moins l'une quelconque des revendications 11 à 14,
**caractérisé en ce**
**qu'**avant l'application sur le support on ajoute à la suspension utilisée additionnellement encore un promoteur d'adhérence qui est choisi parmi les silanes organofonctionnels.

16. Procédé selon au moins l'une quelconque des revendications 11 à 15,
**caractérisé en ce**
**qu'**on utilise comme support un non-tissé polymère qui comporte des fibres choisies parmi un polyacrylonitrile, un polyester, un polyamide et/ou une polyoléfine.

17. Procédé selon au moins l'une quelconque des revendications 11 à 16,
**caractérisé en ce que**
le sol utilisé est obtenu par hydrolyse d'un composé précurseur d'un des éléments Al, Zr ou Si avec de l'eau ou un acide dilué avec de l'eau.

18. Procédé selon au moins l'une quelconque des revendications 11 à 17,
**caractérisé en ce**
**qu'**on fait durcir la suspension présente sur et dans le support par chauffage à une température de 50 à 350 °C.

19. Procédé selon au moins l'une quelconque des revendications 11 à 18,
**caractérisé en ce qu'**après avoir fait durcir la suspension d'abord on traite le revêtement céramique résultant par une solution d'un polymère et ensuite on élimine le solvant.

20. Utilisation d'un séparateur selon au moins l'une quelconque des revendications 1 à 10 en tant que séparateur dans des batteries.

21. Batterie au lithium, comportant un séparateur selon au moins l'une quelconque des revendications 1 à 10.

22. Véhicule, comportant une batterie au lithium selon la revendication 21.
